(19) Europäisches Patentamt
European Patent Office
Office européen des brevets

(11) **EP 2 105 738 A2**

(12) **EUROPÄISCHE PATENTANMELDUNG**

(43) Veröffentlichungstag:
**30.09.2009 Patentblatt 2009/40**

(51) Int Cl.:
*G01N 29/265* (2006.01)          *G01N 29/30* (2006.01)

(21) Anmeldenummer: **09154649.9**

(22) Anmeldetag: **09.03.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **25.03.2008   DE 102008015495**

(71) Anmelder: **Siemens Aktiengesellschaft 80333 München (DE)**

(72) Erfinder:
• **Hain, Stefan 91090, Effeltrich (DE)**
• **Mooshofer, Hubert 80538, München (DE)**
• **de Carvalho Ferreira, Fabricio 91052, Erlangen (DE)**

(54) **Kalibrierung für ein System zur zerstörungsfreien Werkstoffprüfung**

(57)   Es wird eine Kalibrierung für ein Ultraschallsystem zur zerstörungsfreien Werkstoffprüfung angegeben, wobei das System eine Mehrzahl an Ultraschallwandlern aufweist, die insgesamt linear bewegbar, aber gegeneinander fest angeordnet sind, beispielsweise in einem einzigen Sensorhalter fest montiert. Um eine optimale Ausrichtung der Sensoren auf einen Prüfling zu erreichen, wird der durch mechanische Toleranzen entstehende Versatz zwischen der Strahlrichtung der Ultraschallwandler und den idealen Strahlrichtungen ermittelt, beispielsweise anhand einer Ausgleichsgerade. Er wird dann minimiert, indem vorhandene Freiheitsgrade des Sensorhalters verwendet werden, beispielsweise eine mögliche Verkippung des Sensorhalters.

FIG 1

EP 2 105 738 A2

**Beschreibung**

Die Erfindung betrifft das Gebiet der zerstörungsfreien Werkstoffprüfung. Für diese gibt es eine Reihe von Möglichkeiten. So kann beispielsweise mit Sensoren Strahlung wie beispielsweise Wärmestrahlung von einem zu testenden Prüfling empfangen und ausgewertet werden. Dabei wird die Oberfläche des Prüflings beispielsweise abgetastet. Es ist auch möglich, die Strahlung auszusenden und einen reflektierten Anteil dieser Strahlung wieder zu empfangen und auszuwerten. Bei der Strahlung kann es sich um elektromagnetische Strahlung oder auch um Schallwellen wie beispielsweise Ultraschall handeln. Die Erfindung befasst sich dabei insbesondere mit einem Ultraschall-Wandlersystem, ist aber auch für andere Sorten von Strahlung anwendbar. In weiteren Text wird für einen jeweiligen Sensor oder eine Kombination aus einem Sensor und einem Emitter für die Strahlung der Begriff Wandler verwendet. So kann beispielsweise der Ultraschall-Wandler einen Ultraschall-Sensor oder eine Kombination aus einem UltraschallSender und Ultraschall-Empfänger bezeichnen.

Je nach Art der verwendeten Strahlung kann es notwendig sein, einen bestimmten Abstand des oder der Wandler von der Oberfläche des Prüflings einzuhalten. Weiterhin kann es je nach Art der verwendeten Strahlung notwendig sein, einen bestimmten Winkel zur Oberfläche des Prüflings einzuhalten. Je größer die Oberflächenkrümmung beim Prüfling und je stärker die Fokussierung der eingesetzten Wandler ist, desto größer die erforderliche Präzision.

Bei vielen Prüfaufgaben werden Anordnungen bestehend aus mehreren Wandlern eingesetzt, z.B. zur Suche von Defekten unterschiedlicher Orientierung, oder zur Beschleunigung der Prüfung durch gleichzeitige Prüfung mehrerer Stellen. Die Wandler müssen dabei zueinander präzise positioniert und ausgerichtet sein, insbesondere wenn die Messpositionen der Wandler zur präzisen Defektlokalisation räumlich zugeordnet werden müssen, bei starker Oberflächenkrümmung und Einsatz fokussierter Wandler, und/oder gleichzeitiger Prüfung mehrerer Stellen.

In der Praxis treten Herstellungstoleranzen und Abweichungen beim Einsetzen der Wandler auf, im Folgenden am Beispiel von Ultraschall-Wandlern:

-   Das austretende Schallbündel ist nicht exakt konzentrisch. Reale Schallwandler haben Versatz- und Winkelfehler des Schallbündels im Bezug auf die nominelle Achse;
-   Der Laufzeitnullpunkt des Schalls schwankt entsprechend der Herstellungstoleranzen im Bezug auf die Bezugskante des Wandlers, z.B. Anschlag an Vorderkante;
-   Aufgrund von Gehäusetoleranzen können Schwankungen der Wandlerpositionierung, z.B. Seitenversatz bei Durchmesserschwankungen zustande kommen. Durch unpräzises Einsetzen können die Wandler in Längsrichtung verschoben sein. Die Wandlerpositionierung kann sich nach einem Wandleraustausch ändern.

Bei mehreren auf einem gemeinsamen Halter montierter Sensoren ergibt sich für jeden Sensor ein individuell unterschiedlicher Fehler. Auch wenn zur Positionierung und Ausrichtung des Sensorhalters eine hochpräzise Mechanik zum Einsatz kommt, ist die Genauigkeit, mit der die einzelnen Sensoren ausgerichtet sind, unzureichend.

Es ist bekannt, die Sensorpositionierung durch mechanischen Kontakt mit der Oberfläche zu realisieren, z.B. über Rollen und leichten Andruck mittels Federkraft. Beim Einsatz mehrerer Schallwandler kann die Sensorhalterung mehrteilig ausgeführt werden, so dass jeder Wandler separat geführt und über den Andruck an die Oberfläche positioniert wird. Nachteilig ist dabei, dass bei Oberflächen mit starker und schwankender Krümmung keine präzise Führung über Rollen möglich ist. Außerdem ist keine exakte räumliche Zuordnung der Messungen möglich, wenn sich die Wandler ohne Messung der Relativposition bewegen können, was aber bereits bei zwei Wandlern kaum noch praktikabel ist. Nachteilig bei einer Führung über Rollen ist außerdem die mechanische Belastung der Prüflingsoberfläche, bzw. die zur Vermeidung von Beschädigung oder Verschleiß notwendige Begrenzung der Abtast-Geschwindigkeit. Außerdem ist bei Tauchtechnik eine Führung über Rollen kaum praktikabel.

Durch Selektion der Wandler lassen sich die Herstellungstoleranzen verringern. Damit kann ein Teil der genannten Fehlereinflüsse verringert werden. Nachteilig ist dabei, dass nur eine begrenzte Verbesserung erzielt werden kann. Außerdem ist nachteilig, dass dem Grad der Selektion entsprechend mehr Wandler gebraucht werden, insbesondere wenn die Wandler im Bezug auf mehrere Arten von Herstellungstoleranzen, z.B. Versatz, Verkippung des Schallstrahls, Durchmesser, selektiert werden.

Alternativ zu einem starren Sensorhalter, bei dem alle Schallwandler fest eingesetzt werden, kann ein Sensorhalter mit Verstellvorrichtungen konstruiert werden. Nachteilig ist jedoch, dass für jeden Schallwandler eine Verstellvorrichtung für Versatz und eine weitere für die Verkippung vorgesehen werden muss, damit die abgestrahlten Schallbündel der Wandler entsprechend der gewünschten Sollausrichtung eingestellt werden können. Der hierfür erforderliche Aufwand und Platzbedarf ist kaum praktikabel. Im Falle einer kompakten Wandleranordnung lassen sich unter Umständen gar nicht alle Verstelleinrichtungen realisieren. Außerdem müssen für jeden Wandler mehrere Parameter eingestellt werden, was zu einer hochkomplexen Justierung führt.

Eine weitere Möglichkeit ist der Einsatz eines Array-Wandlers anstelle mehrerer Einzelwandler. Bei entsprechender Ansteuerung des Array-Wandlers können unterschiedliche Einschallrichtungen und unterschiedliche Fokussierung implementiert werden. Nachteilig ist der vielfach höhere Aufwand für Herstellung und Ansteuerung, beispielsweise Elektronik und Signalverarbeitung eines Array-Wandlers im Vergleich zum Einzelwandler. Zur 2-dimensionalen Einstellung der Einschallrichtung ist ein 2D-Array-Wandler nötig, der aufgrund der hohen Elementanzahl meist nicht praktikabel ist. Bei Anordnungen unterschiedlicher Typen von Einzelwandlern - wie z.B. unterschiedlicher Frequenz - ist weiterhin nachteilig, dass sich diese nicht durch einen gemeinsamen Array-Wandler ersetzen lassen, d.h. dass entsprechend viele Array-Wandler und entsprechender Aufwand nötig wären.

Es ist Aufgabe der vorliegenden Erfindung, eine Einrichtung zur zerstörungsfreien Werkstoffprüfung und ein Verfahren zur zerstörungsfreien Werkstoffprüfung anzugeben, womit die oben genannten Probleme vermieden werden, d.h. bei denen eine feste Haltereinrichtung mit mehreren Wandlern einsetzbar ist und trotz Herstellungstoleranzen und Abweichungen beim Einsetzen eine präzise Positionierung aller Sensoren zu erreichen ist. Diese Aufgabe wird durch ein Verfahren mit den Merkmalen von Anspruch 1 und eine Einrichtung mit den Merkmalen von Anspruch 8 gelöst. Die abhängigen Ansprüche betreffen vorteilhafte Ausgestaltungen und Weiterbildungen der Erfindung.

Bei dem Verfahren zur zerstörungsfreien Werkstoffprüfung wird eine Einrichtung zur zerstörungsfreien Werkstoffprüfung mit wenigstens zwei Wandlern verwendet. Die Wandler werden dabei zur Aussendung von Strahlen zur Werkstoffprüfung verwendet und sind in einer gemeinsamen Haltereinrichtung angeordnet. Die Haltereinrichtung wird mittels eines Schwenksystems und/oder eines linearen Bewegungssystems entlang einer Bahnkurve über der Oberfläche eines zu prüfenden Werkstücks bewegt, so dass eine Abtastkurve auf der Oberfläche des Werkstücks abgetastet wird. Weiterhin wird für jeden Wandler ein Versatzwert bestimmt, der einen Versatz zwischen der Strahlrichtung des Wandlers und der Abtastkurve angibt. Schließlich wird aus den Versatzwerten eine optimale Ausrichtung der Haltereinrichtung ermittelt, bei der der Versatz der Wandler insgesamt optimiert ist. Zweckmäßigerweise wird die optimale Ausrichtung dann in der Haltereinrichtung implementiert, beispielsweise indem diese in die optimale Ausrichtung bewegt wird. Hierzu kann beispielsweise ein Schwenksystem für die Haltereinrichtung vorgesehen sein. Unter dem Versatz wird dabei der minimale Abstand des Strahls des Wandlers vom vorgesehenen Auftreff-Punkt oder der vorgesehenen Auftreff-Linie verstanden, wobei der Strahl idealisiert ohne seine Aufweitung betrachtet wird.

Die Einrichtung zur zerstörungsfreien Werkstoffprüfung weist wenigstens zwei Wandler zur Aussendung von Strahlen auf. Die Wandler sind dabei in einer gemeinsamen Haltereinrichtung angeordnet und die Haltereinrichtung ist mittels eines Schwenksystems und/oder eines linearen Bewegungssystems entlang einer Bahnkurve über der Oberfläche eines zu prüfenden Werkstücks bewegbar, so dass eine Abtastkurve auf der Oberfläche des Werkstücks abgetastet werden kann. Für jeden Wandler ist ein Versatzwert bestimmbar, der einen Versatz zwischen der Strahlrichtung des Wandlers und der Abtastkurve angibt und aus den Versatzwerten ist eine optimale Ausrichtung der Haltereinrichtung bestimmbar, bei der der Versatz der Wandler insgesamt optimiert ist. Die Haltereinrichtung ist schließlich derart ausrichtbar, dass die optimale Ausrichtung erreicht wird. Die Ausrichtung der Haltereinrichtung kann dabei automatisiert erfolgten, beispielsweise über ein Schwenksystem, oder manuell.

Bei der Abtastkurve handelt es sich bevorzugt um eine im Wesentlichen geradlinige Abtastkurve. Es ist aber auch möglich, die Erfindung bei anderen Abtastkurven wie beispielsweise Kreisbahnen zu verwenden.

Die Erfindung gewährleistet, dass die durch mechanische Toleranzen bewirkten Ungenauigkeiten bei der Bestrahlung der Oberfläche eines Werkstücks oder Prüflings ausgeglichen werden und somit eine wesentlich genauere Prüfung durchgeführt wird. Die Inspektionsergebnisse von mehreren Wandlern lassen sich dadurch präzise zuordnen und es wird weiterhin eine Verkürzung der Inspektionszeit durch parallele Inspektion mit mehreren Schallwandlern bei hoher Genauigkeit ermöglicht.

Bei dem Wandler handelt es sich bevorzugt um einen Ultraschall-Wandler, der eine Kombination aus einem Ultraschall-Emitter und einem Sensor für Ultraschall darstellt. Bevorzugt weist die Einrichtung eine Mehrzahl der Wandler auf. Die Erfindung ist aber auch verwendbar mit anderen Wandlern wie optischen Sensoren, insbesondere Kameras oder Photodioden oder sogar solchen Wandlern, die für sich genommen keinen Sensor enthalten, beispielsweise Laser.

Es ist auch möglich, die Erfindung auf alle Wandler einer Haltereinrichtung anzuwenden, also für jeden Wandler den Versatz zu bestimmen. Alternativ kann auch nur ein Teil der Wandler betrachtet werden. Dies ist vorteilhaft, wenn nur für einen Teil der Wandler eine besonders hohe Genauigkeit erforderlich ist.

Vorteilhafterweise ist für die Bestimmung des Kalibrierwerts ein Kalibrierkörper vorgesehen. Dieser weist bevorzugt eine hohlkugelförmige, kugelförmige Fläche auf, ist also insbesondere eine halbe Hohlkugel oder eine Kugel. Auch eine hohlzylindrische oder zylindrische Fläche kann verwendet werden.

Bevorzugt wird zur Bestimmung des Versatzwerts für einen Wandler die genaue Ausstrahlrichtung des Wandlers bestimmt, indem für zwei Abstände des Wandlers vom Kalibrierkörper ermittelt wird, bei welcher linearen Verschiebung des Wandlers der am Kalibrierkörper reflektierte Strahl den Wandler trifft.

Da beim Abtasten eines Prüflings die Haltereinrichtung entlang der Abtastkurve bewegt wird, kann ein Positionsfehler in Richtung der Abtastkurve bevorzugt dadurch ausgeglichen werden, dass die Messung mit diesem Wandler entsprechend der Geschwindigkeit der Abtast-Bewegung früher oder später erfolgt. Ein Positionsfehler in Richtung des Schallstrahls bzw. bei optischen Sensoren und auch allgemein: in Richtung der Sensorachse kann ausgeglichen werden, in dem die geänderte (Schall-)Laufzeit berücksichtigt wird. Dabei muss zweckmäßig lediglich vorausgesetzt werden, dass der Positionsfehler moderat genug ist, so dass ein etwaiger Focusbereich nicht hinsichtlich des Abstandes verlassen wird, was bei den üblichen Schallwandlern vorausgesetzt werden kann. Vorausgesetzt wird außerdem, dass bei einem moderaten Winkelfehler lediglich eine daraus resultierende Verschiebung des Auftreffpunktes störend ist, nicht jedoch der geänderte Winkel, was bei den üblichen Schallwandlern vorausgesetzt werden kann.

Unter diesen Voraussetzungen reicht es aus, wenn der seitliche Abstand der Schallstrahlen bzw. Sensorachsen zur Abtastkurve an einer bestimmten Stelle den für den jeweiligen Wandler gewünschten Wert erreicht. Sensoren, für die ein von Null verschiedener Seitenversatz gewünscht wird, lassen sich zur Vereinfachung der folgenden Überlegungen virtuell auf die Abtastkurve verschieben.

In einer vorteilhaften Ausgestaltung und Weiterbildung der Erfindung wird daher der Versatzwert derart ermittelt, dass er eine laterale Abweichung angibt, wobei die laterale Abweichung die Abweichung des Strahls des Wandlers von der Abtastkurve in einer Richtung senkrecht zur Abtastkurve und senkrecht zur Ausstrahlrichtung des Wandlers angibt.

Bevorzugt wird die optimale Ausrichtung so bestimmt, dass das Fehlerquadrat der lateralen Abweichungen minimiert ist, beispielsweise mittels linearer Regression für eine geradlinige Abtastkurve.

Weitere Vorteile und Einzelheiten der Erfindung werden anhand des in der Zeichnung dargestellten Ausführungsbeispiels erläutert. Dabei zeigen schematisch

Figur 1 eine Abtastkurve auf einem Prüfling und vier Ultraschallwandler
Figur 2 einen Ultraschallwandler und einen Hohlkugel-Kalibrierkörper

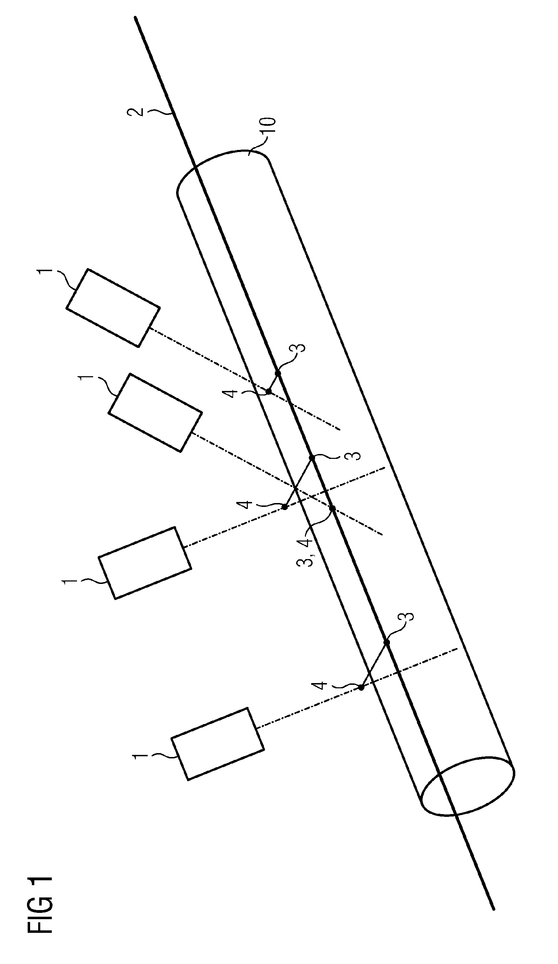

Anhand der Fig. 1 wird das Problem für eine geradlinige Abtastkurve erläutert. Figur 1 zeigt beispielhaft vier Ultraschall-Wandler 1. Diese sind in einem nicht gezeigten gemeinsamen Halter befestigt und senden Schall in Richtung der Oberfläche eines zylindrischen Prüflings 10. Der Halter wird dabei zur Abtastung auf der geradlinigen Abtastkurve 2 bewegt. Im Idealfall trifft der Schall-Strahl der Ultraschall-Wandler 1 jeweils auf einen idealen Auftreff-Punkt 3, der auf der Oberfläche des Prüflings 10 genau auf der Abtastkurve 2 liegt. Praktisch wird das aufgrund von mechanischen Toleranzen selten erreicht. Die Ultraschall-Wandler 1 strahlen tatsächlich an der Abtastkurve 2 vorbei, wobei jeweils ein Punkt des nächsten Abstands 4 in Fig. 1 gezeigt ist. Dadurch wird die Genauigkeit der Prüfung reduziert.

In einem beispielhaften Verlauf für das erfindungsgemäße Verfahren zur Lösung des Problems wird der tatsächliche Verlauf von Schallstrahlen mittels einer Kalibrationsvorrichtung 5 bestimmt; festgestellt, welche einstellbaren Freiheitsgrade bestehen, damit eine Formel für den Seitenversatz der Schallstrahlen gegenüber der Abtastkurve 2 in Abhängigkeit der Freiheitsgrade aufzustellen und diese mit einem Optimierungsverfahren, wie z.B. der Regression zu lösen. Die Freiheitsgrade bestehen unabhängig davon, ob sie automatisch, z.B. über Motoren oder manuell, z.B. über Ausrichtung und Fixierung mittels Schraube eingestellt werden können. Letztere können jedoch im Betrieb nicht verändert werden. Typischerweise bestehende Freiheitsgrade sind die Positionierung und Ausrichtung des Sensorhalters. Folgende beispielhafte Schritte werden dazu durchgeführt:

Schritt 1: Vermessung der Positionen der Schallbündel mittels Kalibrationsvorrichtung.

Zur Kalibration wird in diesem Beispiel ein Kalibrierkörper 5 mit einer halbkugelförmigen Mulde 6 eingesetzt. Dessen Formecho, d.h. in der Regel das Echo an der Oberfläche weist die maximale Amplitude auf, wenn der Schallstrahl durch das Zentrum der halbkugelförmigen Mulde 6 läuft. Bei seitlich einfallenden Schallstrahlen ergibt sich eine entsprechend niedrigere Echoamplitude.

Die Bestimmung der lateralen Position eines Schallstrahles geschieht dadurch, dass mittels eines Suchrasters 7, das senkrecht zur Symmetrieachse bei zylindersymmetrischer Kalibrationsvorrichtung 5 ausgerichtet ist, eine Bestimmung der Position maximaler Echoamplitude - bei in Richtung Kalibrationsvorrichtung 5 orientiertem Ultraschall-Wandler 1 durchgeführt wird. Hierbei können auch Techniken zur Steigerung der Robustheit gegenüber Messschwankungen eingesetzt werden, z.B. Glättung. Auch Techniken zur Steigerung der Auflösung wie beispielsweise Interpolation sind verwendbar.

Schritt 2: Bestimmung des räumlichen Verlaufes der Schallstrahlen

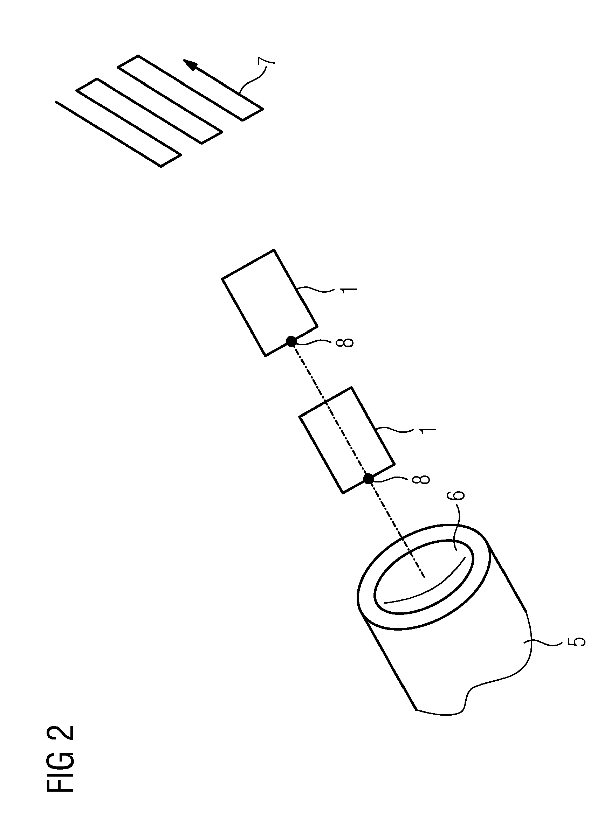

Die Bestimmung der lateralen Position des Schallbündels gemäß dem ersten Schritt wird für jeden Schallwandler 1 in zwei unterschiedlichen Abständen durchgeführt. Hierdurch werden gemäß der Fig. 2 zwei Strahl-Bahnpunkte 8 ermittelt. Der räumliche Verlauf der Schallstrahlen wird als Gerade durch die beiden ermittelten Punkte 8 bestimmt.

Schritt 3: Berechnung und Minimierung des Seitenversatzfehlers der Schallstrahlen vom Wunschverlauf

Für den Fall einer geradlinige Abtastkurve 2 ergeben sich die Parameter $x_0$, $y_0$ und $\alpha_{zy}$, $\alpha_{zx}$, nämlich Startpunkt und Winkel für den bestmöglichen Verlauf der Abtastkurve 2.

Beispielhaft wird die Minimierung des Seitenversatzfehlers durch lineare Regression für den Fall einer geradlinigen Abtastkurve 2 angegeben, d.h. eine Least-Square Minimierung aller Seitenversatzfehler. Dadurch werden die Parameter $x_0$, $y_0$ und $\alpha_{zy}$, $\alpha_{zx}$ bestimmt. Folgende Gleichungen werden beispielsweise dafür verwendet, in denen:

- die Punkte $A_i$ mit den Koordinaten $(x_{Ai}, y_{Ai})$ und $B_i$ mit den Koordinaten $(x_{Bi}, y_{Bi})$ jeweils zwei Punkte einer gemessenen Strahlrichtung eines Wandlers i sind,

- die Parameter $x_0$, $y_0$ und $\alpha_{zy}$, $\alpha_{zx}$ den Anfangspunkt und den Verlauf der gewünschten, weil optimalen Lage der Abtastkurve 2 angeben,

- ei der jeweilige laterale Versatz für einen Wandler i ist:

Die Gleichung $x_i\left(y_i\right) = x_{Ai} + \left(x_{Bi} - x_{Ai}\right) \cdot \dfrac{y_i - y_{Ai}}{y_{Bi} - y_{Ai}}$ ist äquivalent zu:

$$x_i\left(y_i\right) = y_i \cdot \frac{x_{Bi} - x_{Ai}}{y_{Bi} - y_{Ai}} + x_{Ai} - y_{Ai} \cdot \frac{x_{Bi} - x_{Ai}}{y_{Bi} - y_{Ai}}$$

Für die nachfolgenden Gleichungen ist $k_{1i} = \dfrac{x_{Bi} - x_{Ai}}{y_{Bi} - y_{Ai}}$ und

$$k_{2i} = x_{Ai} - y_{Ai} \cdot \frac{x_{Bi} - x_{Ai}}{y_{Bi} - y_{Ai}}$$

Für den Verlauf der gewünschten, weil optimalen Lage der Abtastkurve 2 gilt:

$$x_{0i} = \tan\left(\alpha_{zx}\right) \cdot z_i + x_0$$

$$y_{0i} = \tan\left(\alpha_{zy}\right) \cdot z_i + y_0$$

Der laterale Versatz ist:

$$e_i = x_i\left(y_{0i}\right) - x_{0i} = \begin{bmatrix} k_{1i} \cdot z_i & k_{1i} & -z_i & -1 \end{bmatrix} \cdot \begin{bmatrix} \tan\left(\alpha_{zy}\right) \\ y_0 \\ \tan\left(\alpha_{zx}\right) \\ x_0 \end{bmatrix} + k_{2i}$$

Die obige Formel ist äquivalent zu e = M * p - y, wobei:

$$p = \begin{bmatrix} \tan\left(\alpha_{zy}\right) \\ y_0 \\ \tan\left(\alpha_{zx}\right) \\ x_0 \end{bmatrix} \quad ; \quad M = m_i = \begin{bmatrix} k_{1i} \cdot z_i & k_{1i} & -z_i & -1 \end{bmatrix} ; \quad \text{y} = -\text{k}_{2i} ;$$

Für das minimale Fehlerquadrat $\sum_i e_i^2 = \min.$ folgt:

$$p = -\left(M^T \cdot M\right)^{-1} \cdot M^T \cdot y$$

Schritt 6: Einstellung der optimalen Parameter wie z.B. Ausrichtung, Abstand und Versatz des Halters, automatisch oder manuell. Im Falle der linearen Regression würde das bedeuten, dass der Halter so eingestellt wird, dass die errechnete Ausgleichsgerade gerade auf der Abtastkurve zu liegen kommt.

**Patentansprüche**

1.   Verfahren zur zerstörungsfreien Werkstoffprüfung, bei dem:

    - eine Einrichtung zur zerstörungsfreien Werkstoffprüfung mit wenigstens zwei Wandlern verwendet wird,
    - die Wandler zur Aussendung von Strahlen zur Werkstoffprüfung verwendet werden, wobei die Wandler in einer gemeinsamen Haltereinrichtung angeordnet sind,
    - die Haltereinrichtung mittels eines Schwenksystems und/oder eines linearen Bewegungssystems entlang einer Bahnkurve über der Oberfläche eines zu prüfenden Werkstücks bewegt wird, so dass eine Abtastkurve auf der Oberfläche des Werkstücks abgetastet wird,
    - für jeden Wandler ein Versatzwert bestimmt wird, der einen Versatz zwischen der Strahlrichtung des Wandlers und der Abtastkurve angibt,
    - aus den Versatzwerten eine optimale Ausrichtung der Haltereinrichtung ermittelt wird, bei der der Versatz der Wandler insgesamt optimiert ist.

2.   Verfahren gemäß Anspruch 1, bei dem für die Bestimmung der Versatzwerte ein Kalibrierkörper verwendet wird, wobei anhand dessen Reflektion des Strahls der Versatz ermittelt wird.

3.   Verfahren gemäß Anspruch 2, bei dem ein Kalibrierkörper verwendet wird, der wenigstens einen Teil einer hohlkugelförmigen, kugelförmigen, hohlzylindrischen oder zylindrischen Fläche aufweist.

4.   Verfahren gemäß Anspruch 2 oder 3, bei dem zur Bestimmung des Versatzwerts für einen Wandler eine Ausstrahlrichtung des Wandlers bestimmt wird, indem für zwei Abstände des Wandlers vom Kalibrierkörper ermittelt wird, bei welcher linearen Verschiebung des Wandlers der am Kalibrierkörper reflektierte Strahl den Wandler trifft.

5.   Verfahren gemäß Anspruch 4, bei dem der Versatzwert derart ermittelt wird, dass er eine laterale Abweichung angibt, wobei die laterale Abweichung die Abweichung des Strahls des Wandlers von der Abtastkurve in einer Richtung senkrecht zur Abtastkurve und senkrecht zur Ausstrahlrichtung des Wandlers angibt.

6.   Verfahren gemäß Anspruch 5, bei dem die optimale Ausrichtung so bestimmt wird, dass das Fehlerquadrat der lateralen Abweichungen minimiert ist.

7.   Verfahren gemäß Anspruch 6, bei dem eine geradlinige Bahn als Bahnkurve verwendet wird und die optimale Ausrichtung mittels linearer Regression bestimmt wird.

8.   Einrichtung zur zerstörungsfreien Werkstoffprüfung mit wenigstens zwei Wandlern zur Aussendung von Strahlen, bei der:

    - die Wandler in einer gemeinsamen Haltereinrichtung angeordnet sind,
    - die Haltereinrichtung mittels eines Schwenksystems und/oder eines linearen Bewegungssystems entlang einer Bahnkurve über der Oberfläche eines zu prüfenden Werkstücks bewegbar ist, so dass eine Abtastkurve auf der Oberfläche des Werkstücks abgetastet werden kann,
    - für jeden Wandler ein Versatzwert bestimmbar ist, der einen Versatz zwischen der Strahlrichtung des Wandlers und der Abtastkurve angibt,
    - aus den Versatzwerten eine optimale Ausrichtung der Haltereinrichtung bestimmbar ist, bei der der Versatz der Wandler insgesamt optimiert ist,
- die Haltereinrichtung derart ausrichtbar ist, dass die optimale Ausrichtung erreicht wird.

9. Einrichtung gemäß Anspruch 8, die einen Kalibrierkörper zur Bestimmung der Versatzwerte aufweist, der wenigstens einen Teil einer hohlkugelförmigen, kugelförmigen, hohlzylindrischen oder zylindrischen Fläche aufweist.

10. Einrichtung gemäß einem der vorangehenden Ansprüche, bei der der Wandler ein Ultraschall-Wandler ist.

11. Einrichtung gemäß einem der Ansprüche 8 bis 10, ausgestaltet zur Durchführung eines Verfahrens gemäß einem der Ansprüche 1 bis 7.

FIG 1

EP 2 105 738 A2

FIG 2

EP 2 105 738 A2